(19) **Europäisches Patentamt / European Patent Office / Office européen des brevets**

(11) **EP 3 099 513 B1**

(12) **FASCICULE DE BREVET EUROPEEN**

(45) Date de publication et mention
de la délivrance du brevet:
**07.02.2018 Bulletin 2018/06**

(21) Numéro de dépôt: **14830963.6**

(22) Date de dépôt: **24.12.2014**

(51) Int Cl.:
**B42D 15/00** (2006.01)     **G02B 5/00** (2006.01)
**G02B 5/18** (2006.01)     **G02B 5/20** (2006.01)
**G02B 27/32** (2006.01)

(86) Numéro de dépôt international:
**PCT/EP2014/079321**

(87) Numéro de publication internationale:
**WO 2015/113718 (06.08.2015 Gazette 2015/31)**

(54) **COMPOSANT OPTIQUE DE SECURITE A EFFET PLASMONIQUE, FABRICATION D'UN TEL COMPOSANT ET DOCUMENT SECURISÉ EQUIPÉ D'UN TEL COMPOSANT**

PLASMONISCHE OPTISCHE SICHERHEITSKOMPONENTE, HERSTELLUNG SOLCH EINER KOMPONENTE UND MIT SOLCH EINER KOMPONENTE AUSGESTATTETES SICHERES DOKUMENT

PLASMONIC OPTICAL SECURITY COMPONENT, PRODUCTION OF SUCH A COMPONENT AND A SECURE DOCUMENT EQUIPPED WITH SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2014 FR 1450766**

(43) Date de publication de la demande:
**07.12.2016 Bulletin 2016/49**

(73) Titulaire: **SURYS**
**77600 Bussy-Saint-Georges (FR)**

(72) Inventeur: **SAUVAGE-VINCENT, Jean**
**F-94100 Saint Maur des Fossés (FR)**

(74) Mandataire: **Osha Liang**
**2, rue de la Paix**
**75002 Paris (FR)**

(56) Documents cités:
| | |
|---|---|
| EP-A1- 2 151 328 | WO-A1-2012/156049 |
| WO-A1-2013/060817 | WO-A1-2014/023415 |
| JP-A- 2008 275 740 | JP-A- 2012 123 102 |

**Description**

## DOMAINE DE LA DIVULGATION

La présente divulgation concerne le domaine du marquage de sécurité. Plus particulièrement, elle se rapporte à un composant optique de sécurité présentant des effets optiques en réflexion variables sur ses faces recto et verso, à un procédé de fabrication d'un tel composant et à un document sécurisé équipé d'un tel document.

## ETAT DE L'ART

On connaît de nombreuses technologies pour l'authentification de documents ou de produits, et notamment pour la sécurisation de documents tels que des documents de valeur de type billets de banque, des passeports ou autres documents d'identification. Ces technologies visent à la production de composants optiques de sécurité dont les effets optiques en fonction des paramètres d'observation (orientation par rapport à l'axe d'observation, position et dimensions de la source lumineuse, etc.) prennent des configurations très caractéristiques et vérifiables. Le but général de ces composants optiques est de fournir des effets nouveaux et différenciés, à partir de configurations physiques difficilement reproductibles.

Parmi ces composants, on appelle DOVID pour "Diffractive Optical Variable Image Device", les composants optiques produisant des images diffractives et variables que l'on appelle communément les hologrammes. Ces composants sont généralement observés en réflexion.

D'autres composants optiques de sécurité sont connus, qui permettent une authentification par observation du composant en transmission.

Ainsi, le brevet français FR 2973917 au nom de la déposante, décrit un composant optique de sécurité à effet plasmonique comprenant deux couches en matériau diélectrique transparent et une couche métallique agencée entre les couches en matériau diélectrique pour former deux interfaces diélectrique - métal, la couche métallique étant structurée pour former des ondulations aptes à coupler des modes de plasmon de surface supportés par les interfaces diélectrique - métal avec une onde lumineuse incidente. Un tel composant présente un effet de transmission extraordinaire dans une bande spectrale centrée sur une longueur d'onde de centrage, définie par les caractéristiques des ondulations des zones de couplage.

On s'intéresse dans la présente demande à des composants optiques de sécurité à effet plasmonique présentant des effets en réflexion variables suivant l'observation sur la face recto ou sur la face verso du composant.

De tels composants sont divulgués, par exemple, dans le document WO 2012/156049.

## RESUME DE LA DIVULGATION

Selon un premier aspect, un ou plusieurs modes de réalisation concernent un composant optique de sécurité à effet plasmonique, ledit composant optique comprenant deux couches en matériau diélectrique transparent et une couche métallique agencée entre lesdites couches en matériau diélectrique transparent pour former deux interfaces diélectrique - métal et structurée pour former, sur une première zone de couplage, un premier réseau de couplage à deux dimensions, périodique, apte à coupler des modes de plasmon de surface supportés par lesdites interfaces diélectrique - métal avec une onde lumineuse incidente, le premier réseau de couplage présentant un profil asymétrique selon chacune de ses directions, et, sur une deuxième zone de couplage, un deuxième réseau de couplage à deux dimensions, périodique, apte à coupler des modes de plasmon de surface supportés par lesdites interfaces diélectrique - métal avec une onde lumineuse incidente, le deuxième réseau de couplage présentant un profil asymétrique selon chacune de ses directions, différent de celui du premier réseau de couplage lorsqu'il est vu du même côté du composant que le premier réseau de couplage.

Le deuxième réseau de couplage est le négatif du premier réseau de couplage. En outre, le pas de chaque réseau de couplage selon chacune de ses directions est compris entre 100 nm et 600 nm, par exemple entre 200 nm et 500 nm.

Selon l'invention, indépendamment de la valeur du pas du premier réseau de couplage et du deuxième réseau de couplage, la hauteur de chacun desdits premier et deuxième réseaux de couplage est comprise entre 10% et 50%, par exemple entre 10% et 49% ou entre 10% et 40% du pas du réseau de couplage.

Un réseau à deux dimensions est un réseau « croisé » formé de deux réseaux à une dimension qui se coupent à angle droit. Il forme ainsi une structure dont la forme est de type « boite d'oeufs ». Par profil asymétrique, on entend dans la présente description un réseau dont le profil selon une direction ne présente pas de symétrie centrale (par rapport à un point).

Un tel composant présente au niveau des première et deuxième zones de couplage, un effet de transmission extraordinaire dans une bande spectrale centrée sur une longueur d'onde donnée, définie par les caractéristiques des interfaces métal-diélectrique et du réseau de couplage dans cette zone.

Du fait du caractère asymétrique des profils des réseaux de couplage et de la différence entre les profils asymétriques des premier et deuxième réseaux de couplage dans les première et deuxième zones de couplage, l'observation en réflexion sur un côté du composant présente un effet coloré variable en fonction de chaque zone ; en effet, la bande spectrale de l'onde lumineuse réfléchie dépend de la bande spectrale de l'onde transmise ainsi que de la bande spectrale de l'onde diffusée qui est modifiée en fonction du profil du réseau.

Par ailleurs, l'effet coloré sur chaque zone est variable en réflexion en fonction de l'observation sur une face ou sur l'autre du composant ; en effet le caractère asymétrique du profil de chaque réseau de couplage entraîne une variation de la bande spectrale de l'onde réfléchie lors de l'observation d'un côté ou de l'autre du composant qui peut se traduire aussi par une variation de l'intensité lumineuse réfléchie dans une bande spectrale donnée.

Chacune des première et deuxième zones de couplage peut prendre une forme diverse, être composée de parties jointives ou non, peut, selon un ou plusieurs modes de réalisation, représenter un motif reconnaissable. Selon un ou plusieurs modes de réalisation, les deux zones de couplage peuvent présenter des formes complémentaires.

Selon un ou plusieurs modes de réalisation, les périodes sont identiques dans les deux directions pour chacun des premier et deuxième réseaux de couplage. Chaque réseau à deux dimensions présente ainsi une maille carrée, ce qui permet d'éviter les variations de couleur par rotation azimutale du composant.

Selon un ou plusieurs modes de réalisation, le profil de chacun des réseaux de couplage selon une direction est un profil pseudo-sinusoïdal, c'est-à-dire qui présente un profil non parfaitement sinusoïdal, avec un rapport cyclique différent de 0,5. Le rapport cyclique de la pseudo-sinusoïde est défini comme le rapport, mesuré par exemple sur une période, entre la plus petite des longueurs entre la longueur pour laquelle la valeur de la pseudo-sinusoïde est supérieure à la valeur médiane de la pseudo-sinusoïde et la longueur pour laquelle la valeur de la pseudo-sinusoïde est inférieure à la valeur médiane de la pseudo-sinusoïde, et la longueur totale de la période. Par exemple, le rapport cyclique peut être strictement inférieur à 40% (ou 0,4), afin de générer une dissymétrie suffisante et des effets en réflexion bien différenciés, d'un côté ou de l'autre.

Selon l'invention, les premier et deuxième réseaux de couplage présentent des périodes identiques, de telle sorte que la bande spectrale de l'onde transmise soit sensiblement identique dans chacune des zones. On observe alors une stabilité en transmission, lors de l'observation du composant sur chacun de ses faces, tandis que les effets en réflexion varient du fait de la différence des profils des réseaux vus du même côté du composant.

Selon l'invention, le deuxième réseau de couplage est le négatif du premier réseau de couplage. Cette configuration permet d'observer une inversion de couleurs dans les première et deuxième zones, lors de l'observation du composant sur chacune de ses faces, le profil d'un premier réseau de couplage vu d'un côté du composant étant identique au profil du deuxième réseau de couplage vu de l'autre côté du composant.

Selon un ou plusieurs modes de réalisation, le composant optique de sécurité comprend en outre sur une région d'au moins une des interfaces métal-diélectrique une couche en matériau diélectrique de haut indice ou de bas indice, par exemple formée selon un motif reconnaissable. Par haut ou bas indice on entend des matériaux dont l'indice de réfraction présente une différence $\Delta n$ avec l'indice de réfraction du matériau diélectrique avec lequel il est en contact supérieure à 0,2 en valeur absolue.

La présence de la couche de haut ou bas indice entraîne une modification dans la région dans laquelle elle est déposée de la bande spectrale de l'onde transmise, permettant de créer des nouvelles zones avec des effets colorés variables en transmission lorsque le composant est observé d'un même côté. Cependant, au niveau de la région dans laquelle est déposée la couche de haut ou bas indice, les effets colorés en transmission sont identiques lors de l'observation sur le recto et sur le verso du composant. La couche de haut ou bas indice entraîne également une modification dans la région où elle est déposée et du côté de l'interface sur laquelle elle est déposée, de la bande spectrale de l'onde réfléchie, du fait des phénomènes de diffusion. Si la couche de haut ou bas indice est déposée de façon sélective sur une interface métal-diélectrique, l'effet en réflexion est donc variable lors de l'observation d'un côté ou de l'autre du composant. Il est ainsi possible d'observer en transmission un motif d'une certaine couleur sur un fond d'une autre couleur, ces couleurs étant stables selon l'observation recto ou verso du composant. En réflexion au contraire, les couleurs du motif sont variables selon une observation d'un côté ou de l'autre du composant.

Selon un ou plusieurs modes de réalisation, la couche métallique peut comprendre en outre une zone non structurée. Cette zone, de forte densité optique, permet de mettre encore davantage en valeur les zones dans lesquelles sont agencés les réseaux de couplage qui présentent dans une bande spectrale donnée une transmission extraordinaire due à l'effet plasmonique.

Selon l'invention, les premier et deuxième réseaux de couplage présentent un pas compris entre 100 nm et 600 nm, par exemple entre 200 nm et 500 nm. Selon l'invention, la profondeur est comprise entre 10% et 50% du pas, par exemple entre 10% et 49% ou entre 10% et 40% du pas, une profondeur réduite du réseau de couplage permettant une meilleure propagation des modes plasmoniques.

Selon un ou plusieurs mode de réalisation, la différence des indices de réfraction desdits matériaux diélectriques transparents dans la bande spectrale visée, par exemple le visible, formant chacune desdites couches peut être inférieure à 0,1, permettant de rendre maximal le couplage et donc la transmission plasmonique pour obtenir un effet de transmission extraordinaire optimal à ladite longueur d'onde de centrage.

Selon un ou plusieurs mode de réalisation, la couche métallique peut être continue sur une partie au moins, et choisie suffisamment fine pour permettre le couplage des modes plasmoniques se propageant aux deux interfaces métal-diélectrique. Selon un ou plusieurs modes de réalisation, une partie au moins de la couche métallique peut être continue et formée en argent. Selon un ou plusieurs modes de réalisation, son épaisseur peut être sensiblement comprise entre 20 et 60 nm, par exemple entre 35 nm et 45 nm. Selon un ou plusieurs modes de réalisation, une partie au moins de la couche métallique peut être continue et formée en aluminium. Selon un ou plusieurs modes de réalisation, son épaisseur peut être sensiblement comprise entre 10 et 30 nm, par exemple entre 15 nm et 25 nm.

Selon un ou plusieurs exemples de réalisation, la couche métallique peut être formée d'un seul métal. Selon un ou plusieurs exemples de réalisation, la couche métallique comprend au moins deux parties formées chacune d'un métal différent. Cela peut permettre des effets visuels différents, tant en réflexion qu'en transmission dans la bande spectrale de l'effet plasmonique.

Dans un deuxième aspect, un ou plusieurs modes de réalisation concernent un élément optique de sécurité destiné à la sécurisation d'un document et comprenant au moins un composant optique de sécurité selon l'une le premier aspect. L'élément de sécurité peut comprendre d'autres composants de sécurité, par exemple des composants holographiques.

Selon un ou plusieurs modes de réalisation, l'élément de sécurité comprend d'autres couches selon les besoins requis pour l'application finale ; par exemple, l'élément de sécurité peut comprendre en plus des couches actives pour l'effet plasmonique un film support portant une desdites couches en matériau diélectrique transparent et/ou un film adhésif disposé sur l'une desdites couches en matériau diélectrique transparent. Ces films sont neutres pour l'effet plasmonique car ils n'altèrent ou n'influencent pas l'interface diélectrique - métal. Ils permettent de faciliter l'adhésion sur le document à sécuriser et/ou la mise en oeuvre de manière industrielle.

Dans un troisième aspect, un ou plusieurs modes de réalisation concernent un document sécurisé comprenant un support et un élément optique de sécurité selon le second aspect, l'élément optique de sécurité étant fixé sur ledit support, ledit support comprenant une zone de transparence au niveau de laquelle est agencé ledit composant optique de sécurité à effet plasmonique.

Le document sécurisé, par exemple un document de valeur de type billet de banque ou un document d'authentification, type carte d'identité, peut, grâce au composant optique de sécurité à effet plasmonique selon la présente divulgation, être facilement contrôlé en réflexion et en transmission par comparaison des effets colorés sur chacune des faces, et sa résistance à la contrefaçon est élevée du fait de la technologie mise en oeuvre.

Selon un ou plusieurs modes de réalisation, le composant optique de sécurité selon le premier aspect ou l'élément optique de sécurité selon le deuxième aspect est encapsulé dans le support du document sécurisé. Des zones de transparence sont prévues de part et d'autre du composant optique de sécurité, permettant ainsi le contrôle en réflexion et en transmission sur chacune des faces.

Dans un quatrième aspect, un ou plusieurs modes de réalisation concernent une méthode de fabrication d'un composant optique de sécurité à effet plasmonique comprenant :

- le dépôt d'une couche métallique sur une première couche en matériau diélectrique transparent structurée, permettant d'obtenir une première interface métal-diélectrique structurée,
- l'encapsulation de ladite couche métallique par une seconde couche en matériau diélectrique transparent, pour former une deuxième interface diélectrique - métal structurée, et dans laquelle :
- les deux interfaces diélectrique - métal sont structurées pour former, sur une première zone de couplage, un premier réseau de couplage à deux dimensions, périodique, apte à coupler des modes de plasmon de surface supportés par lesdites interfaces diélectrique - métal avec une onde lumineuse incidente, le premier réseau de couplage présentant un profil asymétrique, sans symétrie centrale, selon chacune de ses directions, et, sur une deuxième zone de couplage, un deuxième réseau de couplage à deux dimensions, périodique, apte à coupler des modes de plasmon de surface supportés par lesdites interfaces diélectrique - métal avec une onde lumineuse incidente, le deuxième réseau de couplage présentant un profil asymétrique, sans symétrie centrale, selon chacune de ses directions, différent de celui du premier réseau de couplage lorsqu'il est vu du même côté du composant que le premier réseau de couplage,

caractérisée en ce que le deuxième réseau de couplage est le négatif du premier réseau de couplage et en ce que le pas de chaque réseau de couplage selon chacune de ses directions est compris entre 100 nm et 600 nm et la hauteur de chaque réseau de couplage est comprise entre 10% et 50% du pas de celui-ci.

La méthode de fabrication d'un composant optique de sécurité est parfaitement compatible avec les méthodes de fabrication des composants optiques de sécurité connus de l'art antérieur, notamment les composants de type DOVID.

Selon un ou plusieurs modes de réalisation, la méthode comprend en outre la fabrication d'une première matrice pour la structuration des interfaces métal-diélectriques au niveau de la première zone de couplage afin de former le premier réseau de couplage et la fabrication d'une deuxième matrice pour la structuration des interfaces métal-diélectriques au niveau de la deuxième zone de couplage afin de former le deuxième réseau de couplage, la deuxième matrice étant une réplique négative de la première matrice.

Selon un ou plusieurs modes de réalisation, la méthode comprend en outre le dépôt sur une région d'au moins une desdites interfaces métal-diélectrique d'une couche en matériau diélectrique de bas ou haut indice.

## BREVE DESCRIPTION DES FIGURES

D'autres caractéristiques et avantages du composant optique, de l'élément optique, du document sécurisé et de la méthode de fabrication du composant optique apparaîtront à la lecture de la description qui suit, illustrée par les figures qui représentent :

Les figures 1 et 2, des vues partielles, respectivement selon un plan de coupe et de dessus, d'un composant optique de sécurité selon la présente description selon deux modes de réalisation;
La figure 3, un schéma illustrant les effets de réflexion, diffusion et transmission des deux côtés des interfaces métal-diélectrique structurées dans des première et deuxième zones de couplage comprenant respectivement les premier et deuxième réseaux de couplage;
Les figures 4A à 4D, les effets visuels obtenus par observation du composant en réflexion et en transmission, sur le recto et sur le verso du composant, dans une configuration telle que décrite sur la figure 3;
Les figures 5A à 5G, des schémas illustrant respectivement une fonction sinusoïdale et des fonctions pseudo-sinusoïdales, avec différents facteurs de forme, ainsi que d'autres profils asymétriques ;
La figure 6, un schéma illustrant les effets de réflexion, diffusion et transmission des deux côtés des interfaces métal-diélectrique structurées dans une première zone, avec une couche de haut indice diélectrique déposée sur une région d'une des interfaces;
La figure 7, un schéma illustrant les effets de réflexion, diffusion et transmission des deux côtés des interfaces métal-diélectrique structurées dans les première et deuxièmes zones comprenant respectivement les premier et deuxième réseaux de couplage, avec une couche de haut indice diélectrique déposée sur une région d'une des interfaces;
Les figures 8A à 8D, les effets visuels obtenus par observation du composant en réflexion et en transmission, sur le recto et sur le verso du composant, dans une configuration telle que décrite sur la figure 7 ;
Les figures 9A à 9F, des schémas illustrant les fabrications de première et deuxième matrices pour la formation des premier et deuxième réseaux de couplage;
Les figures 10A à 10E, des schémas illustrant la fabrication d'un composant optique de sécurité selon un exemple;
Les figures 11A à 11F, des schémas illustrant la fabrication d'un composant optique de sécurité selon un exemple ;
Les figures 12A et 12B, respectivement des vues recto et verso d'un document sécurisé comprenant un composant optique de sécurité selon la présente description.

## DESCRIPTION DETAILLEE

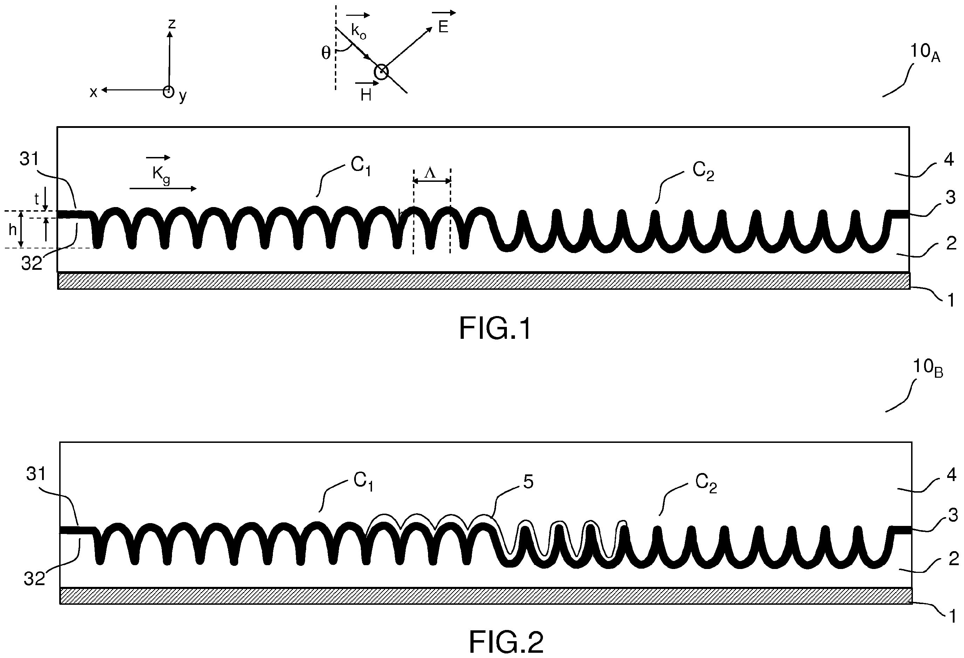

Les figures 1 et 2 représentent selon des vues partielles des vues de coupe de composants de sécurité $10_A$ et $10_B$ selon des exemples de réalisation.

Le composant de sécurité selon un ou plusieurs mode de réalisation comprend généralement une couche métallique 3, par exemple une couche continue, d'épaisseur sensiblement constante, typiquement quelques dizaines de nanomètres, agencée entre deux couches en matériau diélectrique transparent 2, 4 pour former deux interfaces diélectrique - métal référencées respectivement 32, 31 sur les figures 1 et 2. Le métal peut être tout métal susceptible de supporter une résonance plasmonique, par exemple l'argent, l'aluminium, l'or, le chrome, le cuivre. Les matériaux diélectriques peuvent être tout matériau permettant une « association non destructive » avec le métal, c'est-à-dire ne risquant pas de provoquer une réaction physico-chimique, par exemple de type oxydation, qui dégraderait l'effet à contrôler. Les matériaux diélectriques utilisés pour les couches 2 et 4 présentent des indices de réfraction sensiblement identiques, typiquement autour de 1,5, la différence des indices étant avantageusement inférieure à 0,1. Par exemple, la couche 2 en matériau diélectrique et d'indice de réfraction $n_1$ est une couche en matériau polymère destinée à l'embossage et la couche 4 est une couche d'encapsulation en matériau diélectrique de type polymère, d'indice de réfraction $n_2$ sensiblement égal à $n_1$. Les couches 2 et 4 sont transparentes dans le visible. Dans l'exemple de la figure 2, le composant optique de sécurité $10_B$ comprend en outre sur une région d'au moins une desdites interfaces métal-diélectrique une couche 5 en matériau diélectrique de haut ou bas indice dont les effets seront détaillés dans la suite. Avantageusement, l'ensemble des couches est supporté par un film 1 de 12 $\mu$m à 50 $\mu$m en matériau polymère, par exemple en PET (polyéthylène téréphtalate). Le film support 1 peut présenter une fonction de couche support des couches optiques pendant le procédé de fabrication, éventuellement de protection mécanique ; il peut être amovible après transfert des couches optiques sur le support final, comme cela sera détaillé plus en détails par la suite.

Il est connu qu'à l'interface entre un matériau conducteur, par exemple un métal, et un matériau diélectrique, peut se propager une onde électromagnétique de surface associée à une oscillation collective d'électrons à la surface, appelée plasmon de surface. Ce phénomène est par exemple décrit dans l'ouvrage de base de H. Raether (« Surface plasmons », Springer-Verlag, Berlin Heidelberg). Le couplage d'une onde lumineuse incidente à un ou plusieurs modes plasmoniques peut être obtenu de différentes façons, notamment par la structuration de l'interface pour former un réseau de couplage à une ou deux dimensions.

Ce principe de base est mis en oeuvre dans le composant de sécurité selon un ou plusieurs modes de réalisation pour obtenir des effets remarquables en transmission et en réflexion.

Dans le composant de sécurité décrit au moyen des figures 1 ou 2, la couche métallique 3 est structurée pour former, sur une première zone de couplage, un premier réseau de couplage à deux dimensions (C$_1$), apte à coupler des modes de plasmon de surface supportés par les interfaces diélectrique - métal 31 et 32 avec une onde lumineuse incidente, et, sur une deuxième zone de couplage, un deuxième réseau de couplage à deux dimensions (C$_2$), également apte à coupler des modes de plasmon de surface supportés par lesdites interfaces diélectrique - métal avec une onde lumineuse incidente. Le premier réseau de couplage C$_1$ et le deuxième réseau de couplage C$_2$ sont périodiques, à profil asymétrique selon chacune des directions, c'est-à-dire que pour chaque réseau, le profil sur une période ne présente pas de symétrie. Différents exemples de profils asymétriques selon une direction seront détaillés par la suite. Dans chaque zone de couplage, la couche métallique est par exemple continue, déformée de telle sorte à former lesdits réseaux de couplage. Comme cela est illustré sur la figure 1, chaque réseau est caractérisé selon chacune des directions par un pas A, l'amplitude (ou profondeur) h du réseau, définie comme la hauteur entre le pic et le creux, l'épaisseur t de la couche métallique au niveau de la zone de couplage et son asymétrie. Typiquement, le pas d'un réseau selon chacune des directions est compris entre 100 nm et 600 nm, avantageusement entre 200 nm et 500 nm, et la hauteur est comprise entre 10% et 50% du pas du réseau, avantageusement entre 10% et 40%. Avantageusement, les pas des réseaux sont identiques selon chaque direction, permettant de limiter les effets de variations de couleur en réflexion et/ou en transmission par rotation azimutale du composant. L'épaisseur t de la couche métallique doit par ailleurs être suffisamment fine pour permettre l'excitation et le couplage de modes de plasmons de surface aux deux interfaces métal/diélectrique, permettant ainsi un effet de transmission résonante comme cela sera décrit plus en détails ci-dessous.

On considère une onde incidente de polarisation TM (onde transverse magnétique, c'est-à-dire pour laquelle le champ magnétique **H** est perpendiculaire au plan d'incidence xz qui est le plan de la figure sur la figure 1) incidente sur le réseau avec un azimut de 0° par rapport au vecteur réseau **K$_g$** et un angle d'incidence 0 dans la couche 4 par rapport à l'axe y normal au plan du réseau formé par les ondulations 104 et un azimut Φ. Le vecteur réseau **K$_g$**, représenté sur la figure 1, est le vecteur de direction perpendiculaire aux traits du réseau et de norme définie par $K_g = 2\pi/\Lambda$ où Λ est le pas du réseau.

Pour qu'il y ait couplage, c'est-à-dire transfert d'énergie entre l'onde incidente dans un milieu diélectrique de permittivité relative εd et le mode plasmonique, l'égalité suivante doit être satisfaite (1) :

$$k_{sp} = \sqrt{(k_0.n_s.\sin(\theta).\sin(\Phi))^2 + (k_0.n_s.\sin(\theta).\cos(\Phi) + p.K_g)^2}$$

$$(1)$$

Où:

k$_0$ est le nombre d'onde défini par $k_0 = 2\pi/\lambda$
n$_s$ est l'indice de réfraction du matériau diélectrique
p est l'ordre diffractif
k$_{sp}$ est défini par $k_{sp} = n_{sp}k_0$, où n$_{sp}$ est l'indice effectif du plasmon de surface se propageant.

Lorsque la couche métallique est d'épaisseur finie et, de plus, que son épaisseur est de l'ordre de grandeur de la profondeur de pénétration du champ électromagnétique du mode de plasmon dans le métal (qui est d'environ $1/(k_0(n_{sp}^2+Re(|\varepsilon_m|))^{1/2})$), le champ électromagnétique du mode de plasmon à l'interface supérieure de la couche métallique « voit » aussi l'interface inférieure et doit par conséquent aussi satisfaire les conditions aux limites des champs à cet interface inférieure. Il s'ensuit qu'il existe alors deux modes de plasmon pouvant se propager le long de la couche métallique qui, tous deux, ont un maximum de champ aux interfaces supérieure et inférieure de la couche métallique: un mode de plasmon dont le champ magnétique transverse H est pair (donc le champ électrique longitudinal, responsable de l'oscillation longitudinale des électrons, impair, avec un passage par zéro dans la couche métallique), dit le mode de plasmon « long range », et un mode de plasmon dont le champ H est impair, plus fortement absorbé par le métal, dit le mode de plasmon « short range ». Leurs indices effectifs sont voisins lorsque l'épaisseur de la couche métallique n'est pas trop faible (supérieure à 15 nm, par exemple) et ces modes sont tous deux couplés en présence d'un réseau lorsque l'onde incidente émane d'une source de lumière peu cohérente spatialement et temporellement comme une lampe d'éclairage ou la lumière naturelle du soleil. Ainsi, lorsque la condition de couplage est satisfaite, le champ des deux modes de plasmons couplés (ou « excités ») possède un maximum à l'interface inférieure de la couche métallique aussi et peut donc, grâce à la présence du réseau, rayonner dans le milieu transmis et ainsi permettre à l'énergie lumineuse de traverser la couche métallique continue et ainsi produire un pic de transmission, d'où le terme de transmission résonnante.

Dans ce cas, l'indice effectif du plasmon peut être approximé par l'équation (2) suivante :

$$n_{sp} \cong n_s + \frac{1}{2n_s}\left(\frac{k_0\,(n_s^2 - \varepsilon_m)\,wn_s^2}{2\varepsilon_m}\right)^2 \qquad (2)$$

où $\varepsilon_m$ la permittivité du métal.

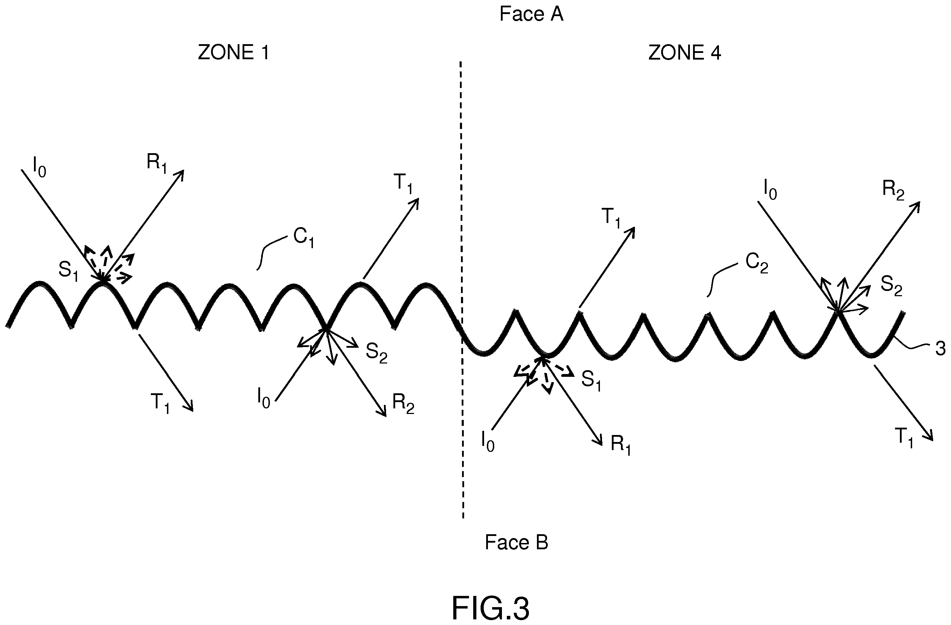

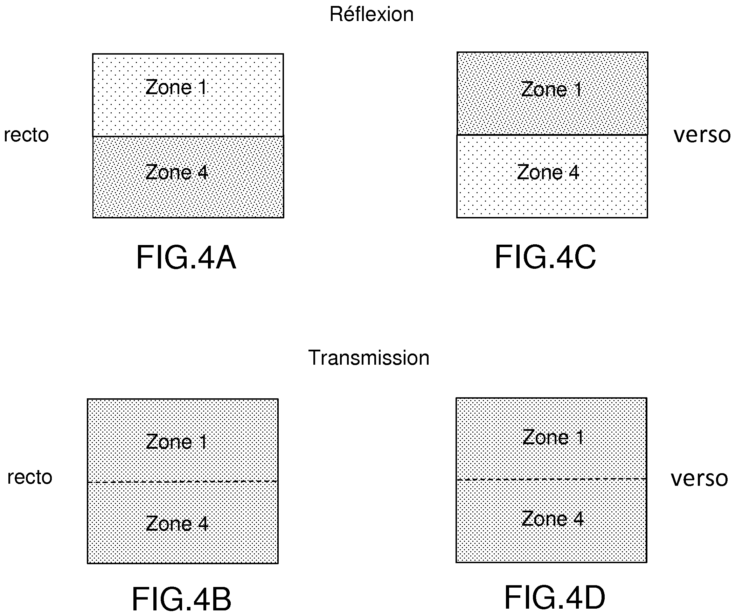

Les effets de l'asymétrie des réseaux selon un premier mode de réalisation sont illustrés sur les figures 3 et 4. La figure 3 représente une vue en coupe simplifiée d'un exemple de composant optique de sécurité selon la présente description et la figure 4 illustre les effets visuels obtenus avec ce composant en réflexion et en transmission, sur chacune des faces A (recto) ou B (verso).

Sur la figure 3, seule la couche métallique 3 est représentée, la couche métallique 3 étant structurée pour présenter, comme sur la figure 1, un premier réseau de couplage $C_1$ dans une première zone de couplage (« zone 1 ») et un deuxième réseau de couplage $C_2$ dans une deuxième zone de couplage (« zone 4 »). Les premier et deuxième réseaux sont asymétriques, et dans cet exemple, l'un est le négatif de l'autre. Il en résulte que le premier réseau de couplage $C_1$ vu d'une première face du composant (face A par exemple), se présente de façon identique au deuxième réseau de couplage $C_2$ vu de l'autre face du composant (face B), et inversement.

L'asymétrie de chacun des réseaux $C_1$ et $C_2$ se traduit notamment par une extension du champ électrique qui est différente à chacune des interfaces diélectrique-métal du mode de plasmon «long range » se propageant le long des deux interfaces 31, 32, résultant en des pertes aux interfaces et une transmission extraordinaire à la longueur d'onde de couplage moins efficace qu'avec un réseau parfaitement symétrique, comme par exemple un réseau sinusoïdal. Comme dans cet exemple, la période de chacun des réseaux vus d'une face ou de l'autre du composant est identique, la longueur d'onde de couplage à laquelle on observe une transmission extraordinaire vu d'un côté ou de l'autre du composant sera identique ; cependant, les pertes aux interfaces sur chacun des côtés varient du fait de l'asymétrie des réseaux. Il en résulte que la réflexion de la lumière incidente, dont l'intensité lumineuse est égale à l'intensité de l'onde incidente à laquelle est retranchée l'intensité de l'onde transmise et l'intensité du flux lumineux diffracté ou diffusé sur les interfaces, est variable selon que le composant est observé sur une face ou sur une autre.

Ainsi dans l'exemple de la figure 3, si l'on note $I_0$ l'intensité lumineuse d'une onde incidente, on observe sur la zone 1 une transmission extraordinaire $T_1$ centrée autour d'une longueur d'onde centrale de couplage, identique selon que le composant est observé sur une face ou sur l'autre. Sur la zone 4, comme le réseau $C_2$ est le négatif du réseau $C_1$, les périodes sont identiques pour les deux réseaux et là encore, sur cette zone, on observe la même transmission $T_1$. Ainsi lors d'une observation en transmission, le composant optique de sécurité présentera une couleur uniforme sur l'ensemble des zones, la couleur étant identique quelle que soit l'observation recto ou verso du composant, comme cela est illustré sur les figures 4B et 4D.

Par contre, du fait de l'asymétrie des réseaux $C_1$ et $C_2$, les pertes par diffraction et par diffusion varient en intensité et en spectre selon l'observation recto ou verso du composant. Ainsi, lors de l'observation recto du composant (face A) sur la zone 1, les pertes par diffraction et par diffusion symbolisées sur la figure 3 par les flèches $S_1$ seront différentes des pertes par diffraction et par diffusion symbolisées sur la figure 3 par les flèches $S_2$, observées sur le verso du composant (face B). Il en résulte une variation spectrale et en intensité de la réflexion observé sur le recto, et référencée $R_1$ sur la figure 3, et de la réflexion observé sur le verso, et référencée $R_2$ sur la figure 3. Comme dans la zone 4 le réseau $C_2$ est le négatif du réseau $C_1$ de la zone 1, les effets en réflexion seront inversés entre la zone 4 et la zone 1. Autrement dit, sur la zone 4 on observera une réflexion $R_2$ sur le recto (face A) et une réflexion $R_1$ sur le verso (face B). Cet effet est schématisé sur les figures 4A et 4C montrant le recto et le verso du composant optique de sécurité lors d'une observation en réflexion. Cette observation est stable quelle que soit la position azimutale du composant si la déformation du profil est présente dans les 2 directions.

Un tel composant optique de sécurité présente ainsi un premier niveau d'authentification résultant d'une observation différenciée en réflexion et en transmission du composant (observation en transmission identique entre les deux zones tandis que l'effet visuel en réflexion varie entre les deux zones). Le composant optique de sécurité présente un deuxième niveau d'authentification résultant de l'inversion des effets visuels en réflexion en fonction des zones d'observation (ici zones 1 et 4) du fait de la structure particulière de deux réseaux à profils asymétriques, négatifs l'un de l'autre.

On appelle réseau à profil asymétrique, un réseau pour lequel selon une direction au moins, le profil est asymétrique sur une période ; plus précisément, il n présente pas de symétrie par rapport à un point. Lorsque sur une période, le profil présente une concavité et une convexité, la concavité dans un profil asymétrique est différente de la convexité. Autrement dit, la concavité vue du verso est différente de la concavité vue du recto.

Un exemple de ces profils asymétriques est réalisé par des profils pseudo-sinusoïdaux.

Un exemple de profils pseudo sinusoïdaux est donné par des profils cycloïdaux définis par :

$$x = a*t - b*\sin t$$

$y = a - b*\cos t$ où a et b réels non nuls avec $1 < |a|/|b| < 5$ et de par exemple $1 < |a|/|b| < 2$

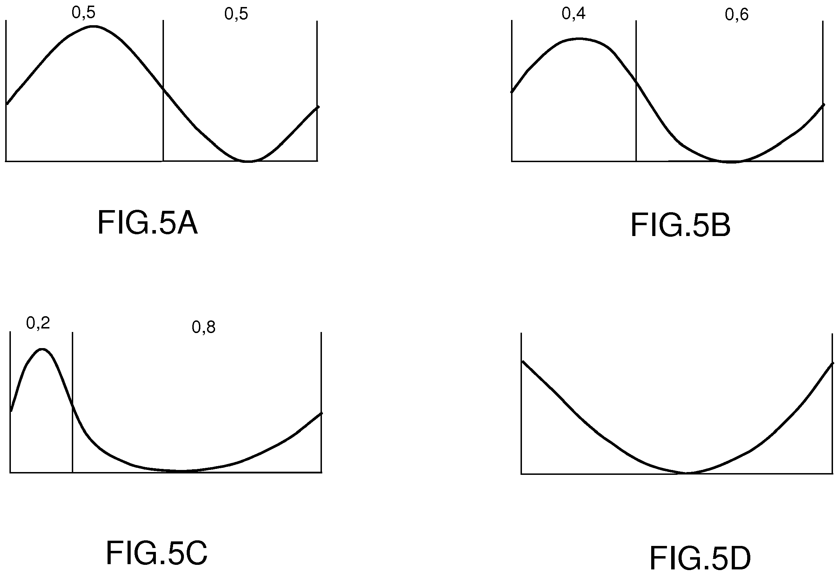

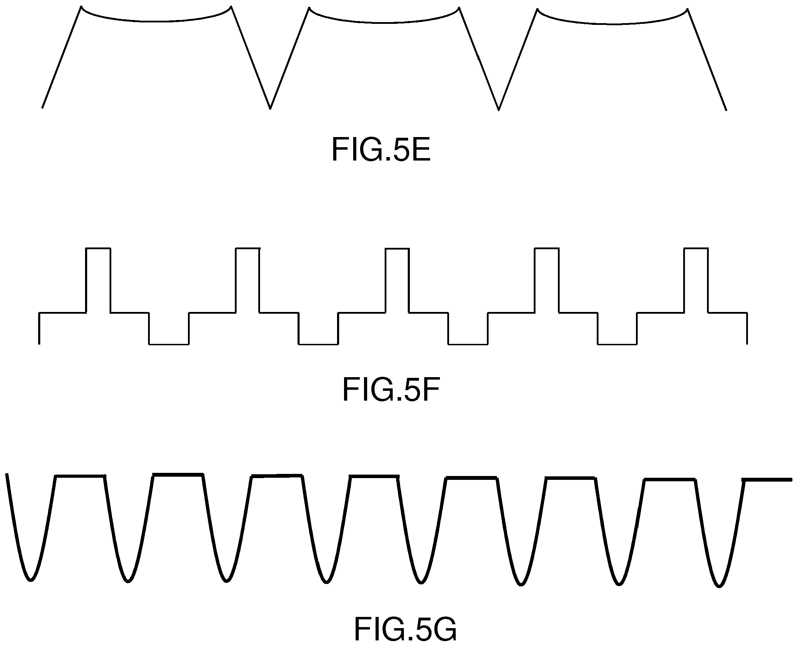

Les figures 5A à 5C illustrent différents profils de réseaux dont des profils pseudo sinusoïdaux adaptés à un composant optique de sécurité selon la présente description (figures 5B, 5C, 5D) comparés à un profil sinusoïdal de référence (figure 5A). Les profils présentés sont des vues de coupes suivant l'une des directions principales du réseau 2D, par exemple suivant la direction du vecteur réseau. On appelle dans la présente description un profil pseudo sinusoïdal un profil qui n'est pas parfaitement sinusoïdal, c'est-à-dire qui présente un rapport cyclique sur une période différent de 0,5, le rapport cyclique étant la longueur d'une demi-oscillation divisée par la période totale. Avantageusement, pour obtenir un effet d'asymétrie suffisant, le rapport cyclique est choisi strictement inférieur à 0,4 (ou 40%). Ainsi la figure 5B illustre un profil pseudo sinusoïdal de rapport cyclique égal à 0,4 ; la figure 5C illustre un profil pseudo sinusoïdal de rapport cyclique égal à 0,2 et à l'extrême, la figure 5D illustre un profil pseudo sinusoïdal de rapport cyclique tendant vers 0, c'est-à-dire qu'une demi-oscillation est très réduite devant l'autre. Le profil dans ce dernier cas tend vers un profil en forme de «cuvettes» tel qu'illustré sur les figures 1, 2 ou 3 par exemple.

Le profil des réseaux asymétriques n'est cependant pas limité à un profil pseudo-sinusoïdal, bien que le profil pseudo-sinusoïdal soit le plus facile à fabriquer. Les figures 5E à 5G illustrent ainsi d'autres types de profils possibles. Dans tous les cas, sur une période, on observe une absence de symétrie.

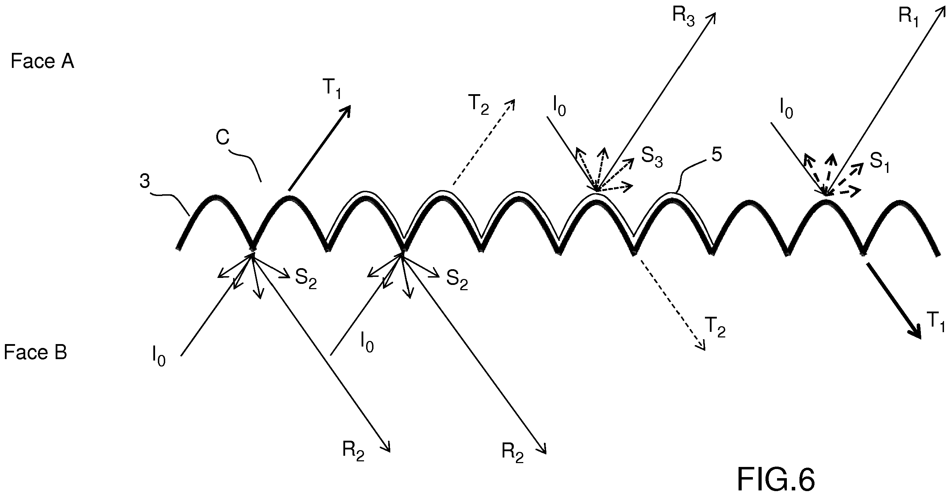

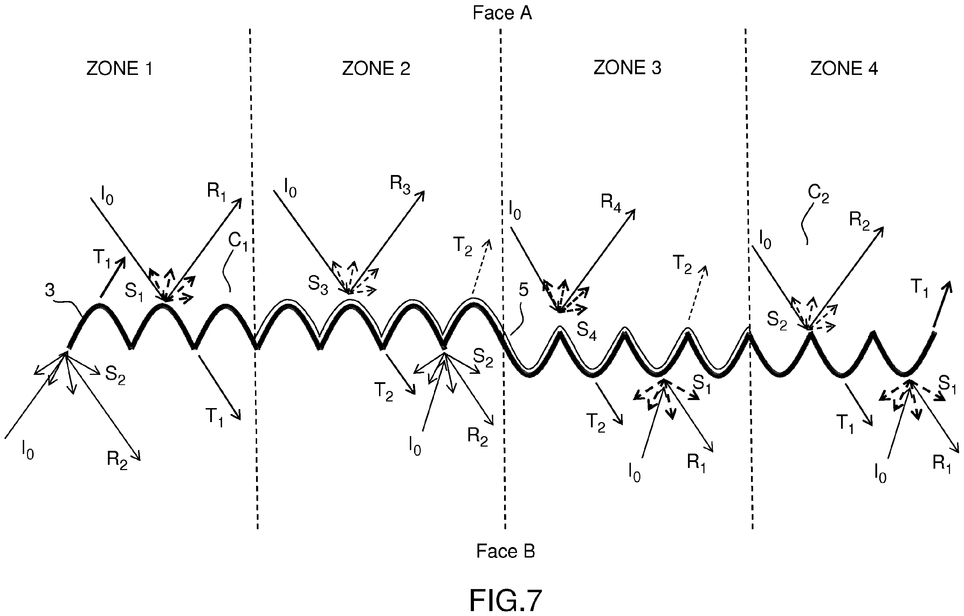

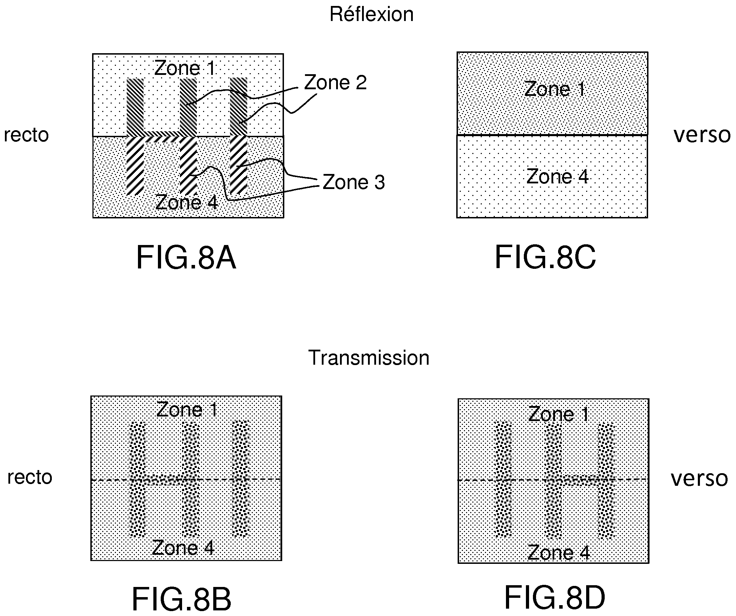

Les figures 6 et 7 illustrent un deuxième mode de réalisation d'un composant optique de sécurité selon la présente description (vue simplifiée en coupe) et la figure 8 illustre les effets visuels résultants. Dans cet exemple, une couche en matériau diélectrique 5 est présente sur une région d'au moins une des interfaces métal - diélectrique.

Les figures 6 et 7 illustrent un composant du type de celui montré sur la figure 2, mais là encore, pour simplifier les schémas, seule la couche métallique 3 et la couche en matériau diélectrique de fort indice 5 ont été illustrées.

Comme illustré sur la figure 6, par rapport aux effets montrés sur la figure 3, la présence d'une couche en matériau diélectrique haut ou bas indice entraine une variation de la transmission ($T_2$) lors de l'observation du composant sur une face ou sur l'autre. Elle entraîne aussi une variation des pertes par diffraction et diffusion ($S_3$) résultant en une variation en réflexion ($R_3$), mais ce, seulement pour l'observation du côté de l'interface qui porte la couche de haut ou bas indice (face A sur les figures 6 et 7). La variation de la transmission s'explique par la variation de l'indice du diélectrique qui modifie l'indice effectif du plasmon et donc la longueur d'onde transmise. La variation des pertes par diffraction et diffusion s'explique par la modification de l'indice diélectrique qui modifie les conditions de diffractions, de diffusions et de couplage aux modes de plasmon.

Sur la figure 7, on peut ainsi distinguer 4 zones. Une zone 1 avec un premier réseau $C_1$ ; une zone 2 avec le même réseau $C_1$ mais qui comprend sur l'interface métal-diélectrique du côté de la face A (recto) une couche 5 en matériau diélectrique de haut ou bas indice ; une zone 3 avec un deuxième réseau C2 qui, là encore, est le négatif du réseau C1 et sur laquelle se prolonge la couche 5 en matériau diélectrique de haut ou bas indice ; enfin une zone 4 avec le même réseau C2 mais sans la couche de haut ou bas indice. Afin de produire des effets visuels plus caractéristiques, comme cela est illustré sur les figures 8A à 8D, les zones 2 et 3 sont formées selon des formes graphiques reconnaissables.

En ce qui concerne les zones 1 et 4, les effets visuels sont identiques à ceux décrits au moyen des figures 3 et 4. Notamment, le phénomène de transmission extraordinaire (T1) est de comportement identique en intensité et en spectre quelle que soit la face d'observation sur ces deux zones. Par contre, la réflexion varie selon l'observation d'un coté ou de l'autre du composant et s'inverse entre les deux zones. Avec la présence de la couche diélectrique de haut ou bas indice (zones 2 et 3), la transmission change par rapport aux zones 1 et 4 mais reste de comportement identique sur les zones 2 et 3 quelle que soit la face d'observation. Ainsi, comme cela apparaît sur les figures 8B et 8D, on observe à nouveau une stabilité du comportement de l'effet visuel en transmission, quelle que soit la face d'observation du composant, mais dans cet exemple, les zones 2 et 3 forment une forme graphique reconnaissable (« HI ») en transmission. De façon remarquable, comme cela est illustré sur la figure 8A, en réflexion, lors de l'observation sur la face B (verso) qui correspond au côté de l'interface qui ne porte pas la couche de haut ou bas indice 5, la réflexion est constante sur chacune des zones 1 et 2 d'une part (réflexion $R_2$), 3 et 4 d'autre part (réflexion $R_1$). On observe donc pas le symbole « HI » apparaître en réflexion. Par contre, sur la face recto, la présence de la couche diélectrique de haut ou bas indice 5 modifie la réflexion du fait de la variation des pertes par diffusion et diffraction (respectivement $S_3$ sur la zone 2 et $S_4$ sur la zone 3). On observe ainsi des réflexions différentes en intensité et en spectre sur chacune des zones et l'apparition, en réflexion sur le recto du composant, du signe graphique « HI ».

Le composant ainsi décrit présente par rapport au composant décrit au moyen des figures 3 et 4 un niveau d'authentification supplémentaire, résultant de l'apparition d'un signe graphique reconnaissable, en réflexion, sur l'une des faces seulement du composant.

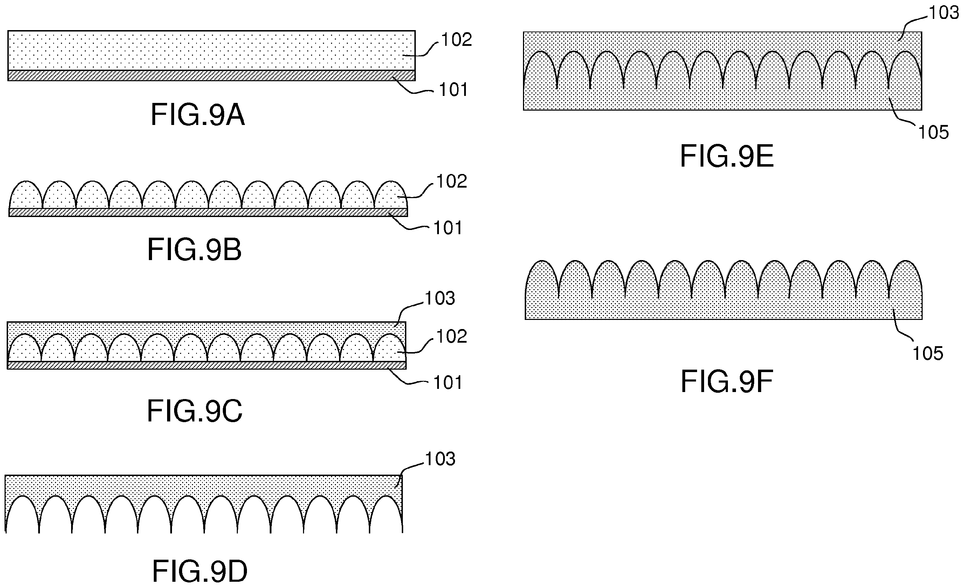

Les composants de sécurité tels que décrits précédemment peuvent être réalisés par exemple selon des méthodes de fabrication décrites au moyen des figures 9 à 11.

Dans une première étape décrite par exemple au moyen des figures 9A à 9F, des matrices ou « master » sont obtenues pour créer les microstructures qui pourront ensuite être reportées sur des films en vue de la réalisation des composants. Dans une étape initiale illustrée sur la figure 9A, un enregistrement des microstructures optiques destinées à former un premier réseau de couplage à deux dimensions, est réalisé par photolithographie ou lithographie par faisceau d'électrons sur un support photosensible 102 ou « photorésist » selon l'expression anglo-saxonne, porté par un substrat 101. Le profil dissymétrique des microstructures peut être obtenu par la gestion de la linéarité de la réponse de la photoresist utilisé. La photoresist en question est utilisé dans sa zone de non-linéarité, l'augmentation de l'apport d'énergie apporté à la photoresist ne correspondra plus à l'augmentation de la profondeur après développement chimique. On obtient par ce procédé des profils hautement asymétriques. Une étape de développement chimique (figure 9B) permet de révéler les microstructures optiques ainsi obtenues. Puis une étape de galvanoplastie (figure 9C) permet de reporter ces microstructures dans un matériau résistant par exemple à base de Nickel pour réaliser une première matrice 103 ou « master » (figure 9D) formant dans cet exemple une première réplique négative. Une réplique positive 105 (figure 9F), par exemple à base de Nickel également, peut être obtenue par une deuxième étape de galvanoplastie (figure 9E). On obtient ainsi une première matrice 103 et une deuxième matrice 105, chaque matrice formant le négatif de l'une par rapport à l'autre, ces matrices pouvant être transférées sur film pour former des composants optiques de sécurité tels qu'illustrés par exemple sur les figures 1 et 2.

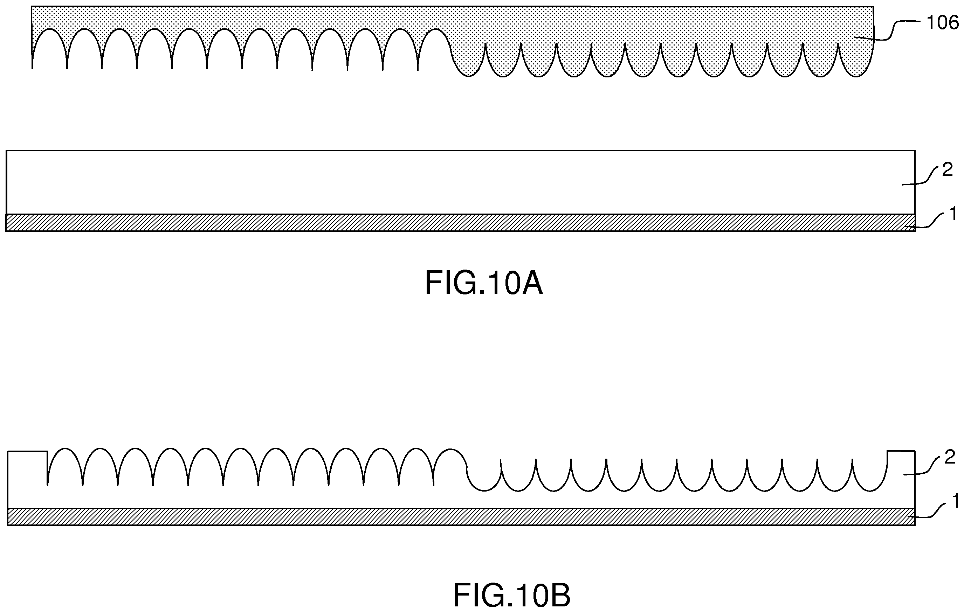

Les figures 10A à 10E illustrent ainsi un premier exemple de fabrication d'un composant optique de sécurité tel que représenté sur les figures 1 ou 2.

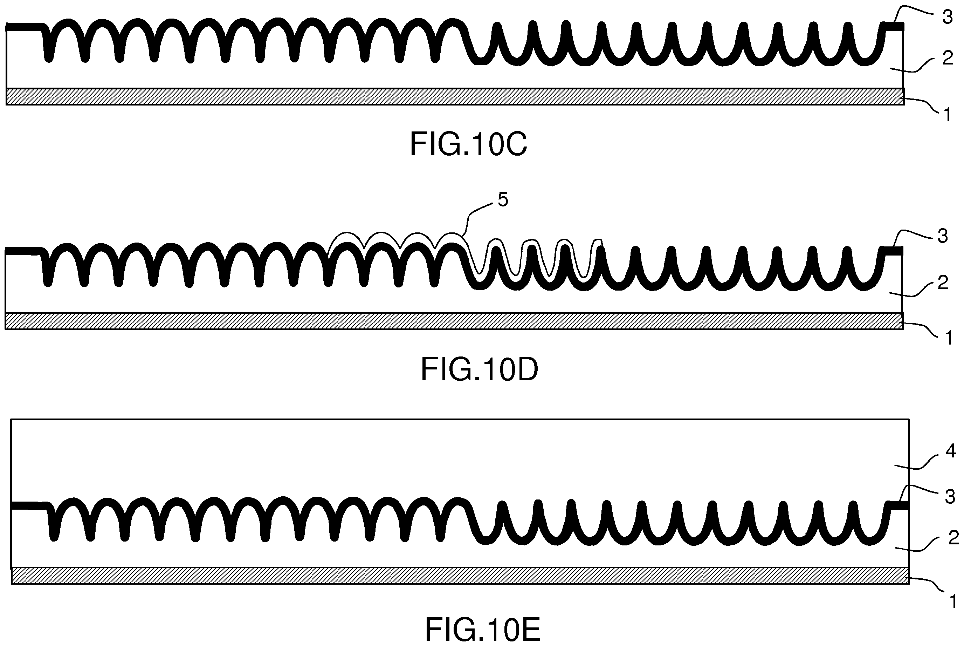

Dans ce premier exemple, on obtient par une technique d'assemblage, sur une même matrice 106 à base de nickel par exemple, une double structure positive et négative (figure 10A). Le transfert des microstructures optiques portées par la matrice 106 est fait par estampage sur une couche 2 en matériau diélectrique, typiquement un vernis d'estampage de quelques microns d'épaisseur porté par un film 1 de 12 $\mu$m à 50 $\mu$m en matériau polymère, par exemple en PET (polyéthylène téréphtalate). L'indice de réfraction de la couche formée du vernis d'estampage est typiquement de 1,5. D'autres couches techniques, de type vernis (non représentées) peuvent être présentes entre la couche 2 et le film 1. L'estampage (figure 10B) est obtenu par pressage à chaud du matériau diélectrique (« hot embossing ») ou par moulage à froid par réticulation UV (« UV casting ou UV curing»). Vient ensuite la métallisation de la couche ainsi embossée (figure 10C) permettant de former une couche métallique 3. La métallisation est faite sous vide, de façon parfaitement contrôlée en épaisseur, avec l'un par exemple des métaux suivants : argent, aluminium, or, chrome, cuivre, etc. Une couche 4 de fermeture d'indice de réfraction contrôlé est ensuite appliquée (figure 10E), par exemple par un procédé d'enduction. Pour certaines applications, telles que les produits de laminage ou de marquage à chaud, cette couche peut être la couche adhésive. La couche de fermeture, qui forme la couche 4 (figure 1) présente un indice de réfraction sensiblement identique à celui de la couche embossée 2, autour de 1,5, avec une épaisseur de l'ordre du micron (0.5 à 2 voire plus)à plusieurs microns. Selon la destination finale du produit, un adhésif peut être appliqué sur la couche de fermeture. Selon un mode de réalisation représenté sur la figure 10D, il est possible de déposer sur une région déterminée une couche diélectrique 5 de haut ou bas indice ; le dépôt de la couche diélectrique 5 de haut ou bas indice peut être fait avant ou après la métallisation, par exemple avant la métallisation. On obtient alors un composant du type de celui représenté sur la figure 2.

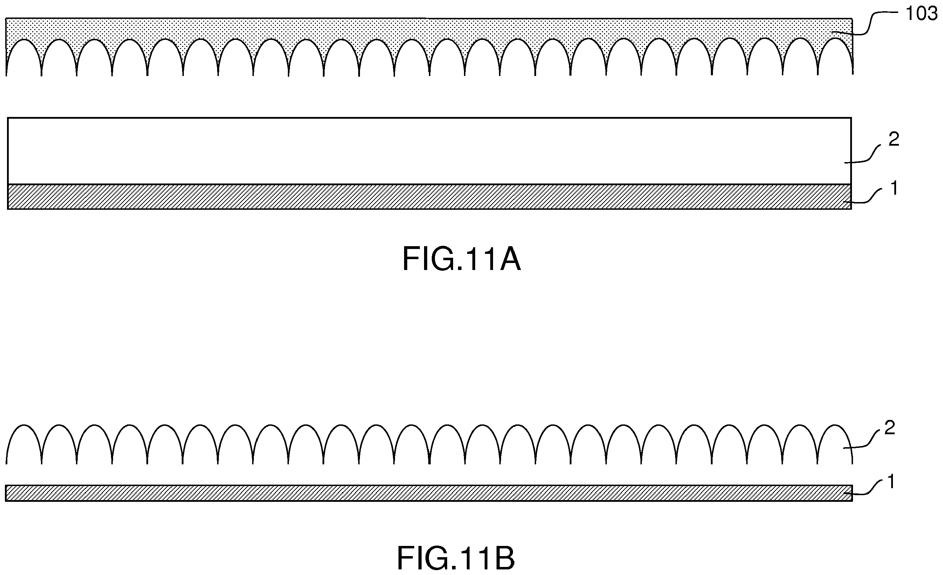

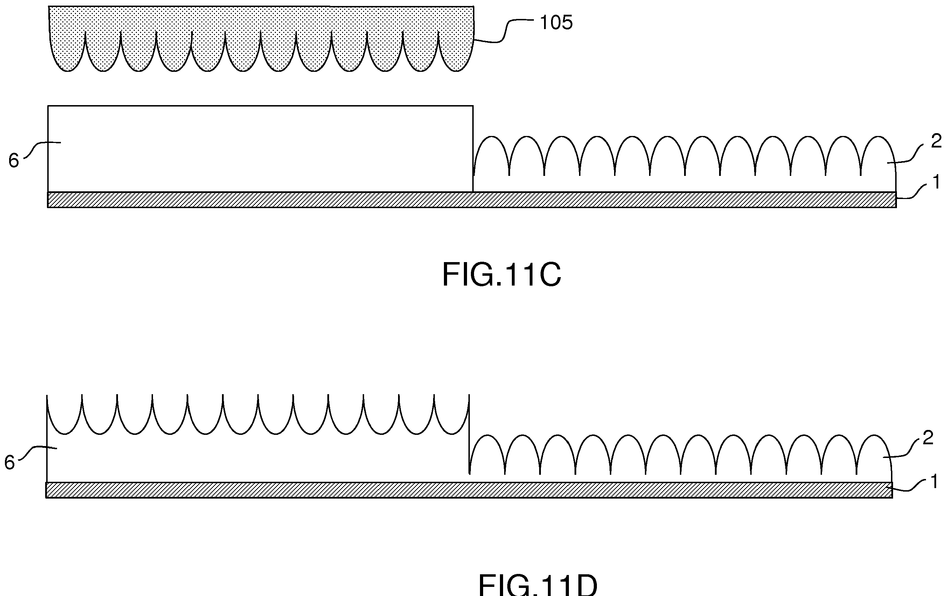

Les figures 11A à 11F illustrent un deuxième exemple de fabrication d'un composant optique de sécurité tel que représenté sur les figures 1 ou 2.

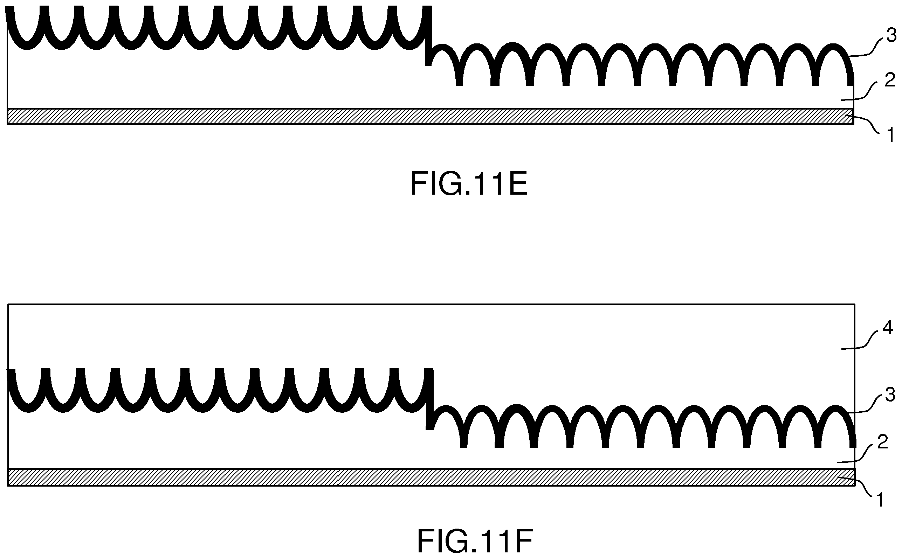

Selon cet exemple, seule une des répliques de la matrice, par exemple la réplique négative 103 de la matrice, est transférée sur la couche en matériau diélectrique 2 (figure 11A), permettant d'obtenir une structure en positif sur l'ensemble du film (figure 11B). Sur une zone du film 2 ainsi structuré, une résine 6 est déposée (figure 11C) de telle sorte à recouvrir partiellement le film, par exemple une résine sensible aux UV d'indice de réfraction proche de celui du film 2, permettant ainsi d' « effacer » les microstructures sur la zone du film recouverte. La structure initiale est cependant toujours présente sur une partie du film 2. On vient alors transférer sur la résine 6 l'autre réplique de la matrice, dans cet exemple la réplique positive 105 de la matrice, par exemple par flash UV, afin d'obtenir un film 2 présentant les deux structures positive et négative (figure 6). Comme précédemment, une métallisation est effectuée (figure 11E) puis l'application de la couche de fermeture 4 est réalisée (figure 11F). Eventuellement, une couche en matériau diélectrique est appliquée avant ou après la métallisation, comme dans l'exemple illustré sur la figure 10D.

Selon un des différents modes de fabrication d'un composant optique de sécurité selon la présente description, il est possible au moment de l'étape de métallisation d'appliquer plusieurs métaux différents, par exemple pour rechercher des effets visuels différents. Pour cela, on pourra par exemple appliquer avec un motif donné une encre soluble sur la couche embossée. Lors de la métallisation avec le premier métal, celui-ci est appliqué uniformément sur la couche mais ne subsiste que sur les zones où ne se trouve pas l'encre lorsque l'encre est retirée. Ensuite une deuxième métallisation sélective est réalisée comprenant également une étape d'impression préalable d'encre soluble permettant de sélectionner les zones d'application du deuxième métal. Il est possible lors de l'application du deuxième métal que les couches métalliques se superposent localement, formant des zones de plus grande densité optique, ou au contraire qu'il en résulte des zones non métallisées qui, une fois rebouchées par la couche de fermeture, formeront des zones transparentes dans le composant. Selon un ou plusieurs modes de réalisation, les zones métalliques différentes peuvent correspondre à des zones de couplage différentes. Autrement dit, le premier métal est appliqué sur une première zone de couplage, tandis que le deuxième métal est appliqué sur une deuxième zone de couplage, permettant dans les différentes zones de couplage des effets colorés distincts. Alternativement, les différents métaux peuvent être déposés selon des zones qui ne correspondent pas aux zones de couplage.

Les méthodes de fabrication d'un composant optique de sécurité précédemment décrites sont compatibles avec les méthodes de fabrication des composants optiques de sécurité connus de l'art antérieur, notamment les composants de type DOVID.

Notamment, il est possible de réaliser un élément optique de sécurité comprenant un ou plusieurs composants de type plasmonique tels que décrits précédemment et un ou plusieurs autres type de composants optiques de sécurité, par exemple de type holographique. Pour cela une matrice peut être réalisée par enregistrement des différents motifs correspondants aux différents composants optiques de sécurité sur le support photosensible 102 ou « photorésist ». L'estampage peut ensuite être réalisé à partir de la matrice pour transférer les différentes microstructures sur le film en matériau polymère, destiné à l'embossage. La métallisation dont l'épaisseur est contrôlée pour les composants à effet plasmonique peut être faite sur l'ensemble du film, car elle est parfaitement compatible avec les autres composants de type DOVID fonctionnant en réflexion.

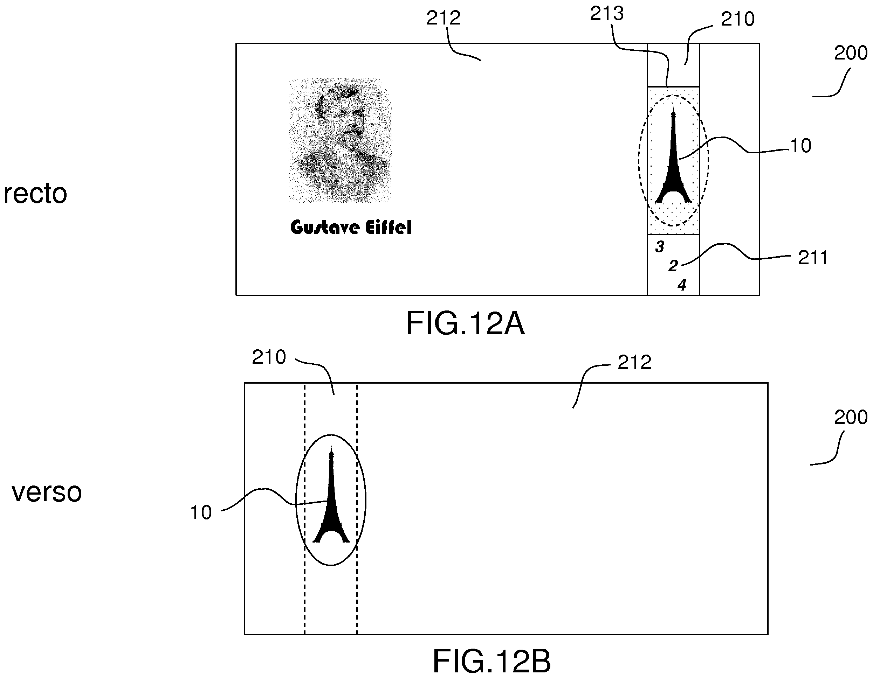

Les figures 12A et 12B représentent un document sécurisé 200, par exemple un document de valeur de type billet de banque, ainsi équipé d'un élément de sécurité 210 comprenant un composant optique de sécurité 10 de type plasmonique et d'autres composants optiques de sécurité 211, par exemple de type holographique. La figure 12A représente une vue de dessus de ce composant et la figure 12B représente une vue de dessous. L'élément de sécurité 210 se présente sous forme d'une bande, typiquement de largeur 15 mm qui vient se fixer sur un support 212 du document 200. L'élément de sécurité 210 est fixé au support 212 par des moyens connus. Par exemple, dans le cas d'un document présentant une zone transparente solide, l'élément de sécurité peut être fixé par transfert à chaud réactivant une couche adhésive transparente préalablement appliquée sur la couche de fermeture 4 (voir figures 1 ou 2). Dans ce cas, une couche de détachement (par exemple une cire) peut être appliquée entre le vernis d'estampage 2 et le film support 1 en PET. On peut, par exemple, transférer l'élément de sécurité sur le document en pressant à chaud ou à froid l'élément de sécurité sur le document, le composant plasmonique se trouvant face à la zone transparente. Pendant le transfert, le film adhésif colle sur le support 212 du document et la couche de détachement ainsi que le film support sont retirés. Dans le support 212 est prévue une fenêtre de transparence 213 au niveau du composant de type plasmonique 10. Vu de dessus, tous les composants optiques de sécurité seront visibles sur le document sécurisé 200 et contrôlables en réflexion selon les différents procédés connus de l'art antérieur. Vus de dessous, seul(s) le ou les composants de type plasmonique seront visibles ; ils pourront être contrôlés en réflexion et en transmission, comme cela a été décrit précédemment.

Il est également possible d'adapter ce composant de sécurité à tout autre document pouvant être authentifié par réflexion et particulièrement aux documents comportant une zone de transparence tels que les documents plastiques (polycarbonate) utilisés au format carte de crédit ou bien encore page de passeport.

Bien que décrite à travers un certain nombre d'exemples de réalisation, le composant optique de sécurité selon la présente divulgation et le procédé de fabrication dudit composant comprennent différentes variantes, modifications et perfectionnements qui apparaîtront de façon évidente à l'homme de l'art, étant entendu que ces différentes variantes, modifications et perfectionnements font partie de la portée de la présente divulgation telle que définie par les revendications qui suivent.

## Revendications

1. Composant optique de sécurité ($10_A$, $10_B$) à effet plasmonique, comprenant :

- deux couches (2,4) en matériau diélectrique transparent,

une couche métallique (3) agencée entre lesdites couches en matériau diélectrique transparent pour former deux interfaces diélectrique - métal (31, 32) et structurée pour former, sur une première zone de couplage, un premier réseau de couplage à deux dimensions ($C_1$), périodique, apte à coupler des modes de plasmon de surface supportés par lesdites interfaces diélectrique - métal avec une onde lumineuse incidente, le premier réseau de couplage présentant un profil asymétrique, sans symétrie centrale, selon chacune de ses directions, et, sur une deuxième zone de couplage, un deuxième réseau de couplage à deux dimensions ($C_2$), périodique, apte à coupler des modes de plasmon de surface supportés par lesdites interfaces diélectrique - métal avec une onde lumineuse incidente, le deuxième réseau de couplage présentant un profil asymétrique, sans symétrie centrale, selon chacune de ses directions, différent de celui du premier réseau de couplage lorsqu'il est vu du même côté du composant que le premier réseau de couplage, **caractérisé en ce que** le deuxième réseau de couplage est le négatif du premier réseau de couplage et **en ce que** le pas de chaque réseau de couplage selon chacune de ses directions est compris entre 100 nm et 600 nm et la hauteur de chaque réseau de couplage est comprise entre 10% et 50% du pas de celui-ci.

2. Composant optique de sécurité selon la revendication 1, dans lequel les périodes sont identiques dans les deux directions pour chacun des premier et deuxième réseaux de couplage.

3. Composant optique de sécurité selon l'une des revendications précédentes, dans lequel le profil selon chacune des directions des premier et deuxième réseaux de couplage est un profil pseudo-sinusoïdal, présentant un rapport cyclique strictement inférieur à 40%.

4. Composant optique de sécurité selon l'une des revendications précédentes, comprenant en outre sur une région d'au moins une desdites interfaces métal-diélectrique une couche en matériau diélectrique de haut ou bas indice.

5. Composant optique de sécurité selon la revendication 4, dans lequel ladite couche en matériau diélectrique de haut ou bas indice est formée selon un motif reconnaissable.

6. Elément optique de sécurité destiné à la sécurisation d'un document et comprenant au moins un composant optique de sécurité selon l'une des revendications précédentes.

7. Document sécurisé (200) comprenant un support (212) et un composant optique de sécurité selon l'une quelconque des revendications 1 à 5 ou un élément optique de sécurité (10) selon la revendication 6, fixé sur ledit support, ledit support comprenant une zone de transparence (213) au niveau de laquelle est agencé ledit composant optique de sécurité.

8. Méthode de fabrication d'un composant optique de sécurité à effet plasmonique comprenant :

- le dépôt d'une couche métallique (3) sur une première couche (2) en matériau diélectrique transparent structurée, permettant d'obtenir une première interface métal-diélectrique structurée (32),
- l'encapsulation de ladite couche métallique par une seconde couche (4) en matériau diélectrique transparent, pour former une deuxième interface diélectrique - métal (31) structurée, et dans laquelle :
- les deux interfaces diélectrique - métal (31, 32) sont structurées pour former, sur une première zone de couplage, un premier réseau de couplage à deux dimensions ($C_1$), périodique, apte à coupler des modes de plasmon de surface supportés par lesdites interfaces diélectrique - métal avec une onde lumineuse incidente, le premier réseau de couplage présentant un profil asymétrique, sans symétrie centrale, selon chacune de ses directions, et, sur une deuxième zone de couplage, un deuxième réseau de couplage à deux dimensions ($C_2$), périodique, apte à coupler des modes de plasmon de surface supportés par lesdites interfaces diélectrique - métal avec une onde lumineuse incidente, le deuxième réseau de couplage présentant un profil asymétrique, sans symétrie centrale, selon chacune de ses directions, différent de celui du premier réseau de couplage lorsqu'il est vu du même côté du composant que le premier réseau de couplage,

**caractérisée en ce que** le deuxième réseau de couplage est le négatif du premier réseau de couplage et **en ce que** le pas de chaque réseau de couplage selon chacune de ses directions est compris entre 100 nm et 600 nm et la hauteur de chaque réseau de couplage est comprise entre 10% et 50% du pas de celui-ci.

9. Méthode selon la revendication 8, comprenant en outre :

- la fabrication d'une première matrice pour la structuration des interfaces métal-diélectriques au niveau de la première zone de couplage afin de former le premier réseau de couplage et la fabrication d'une deuxième matrice pour la structuration des interfaces métal-diélectriques au niveau de la deuxième zone de couplage afin de former le deuxième réseau de couplage, la deuxième matrice étant une réplique négative de la première matrice.

10. Méthode selon l'une quelconque des revendications 8 ou 9, comprenant en outre :

- le dépôt sur une région d'au moins une desdites interfaces métal-diélectrique d'une couche (5) en matériau diélectrique de haut ou bas indice.


**Patentansprüche**

1. Optische Sicherheitskomponente (10$_A$, 10$_B$) mit Plasmonen-Wirkung, umfassend:

- zwei Schichten (2, 4) aus transparentem dielektrischen Material,
eine Metallschicht (3), die zwischen den besagten Schichten aus transparentem dielektrischen Material angeordnet ist, um zwei Metall-Dielektrikum-Grenzflächen (31, 32) zu bilden, und strukturiert, um auf einem ersten Kopplungsbereich ein erstes zweidimensionales Kopplungsnetzwerk (C$_1$) zu bilden, das periodisch ist, dazu geeignet, Oberflächenplasmonenmoden, die durch die besagten Metall-Dielektrikum-Grenzflächen getragen werden, mit einer einfallenden Lichtwelle zu koppeln, wobei das erste Kopplungsnetzwerk ein asymmetrisches Profil ohne zentrale Symmetrie entlang jeder seiner Richtungen aufweist, und auf einem zweiten Kopplungsbereich ein zweites zweidimensionales Kopplungsnetzwerk (C$_2$) zu bilden, das periodisch ist, dazu geeignet, Oberflächenplasmonenmoden, die durch die besagten Metall-Dielektrikum-Grenzflächen getragen werden, mit einer einfallenden Lichtwelle zu koppeln, wobei das zweite Kopplungsnetzwerk ein asymmetrisches Profil ohne zentrale Symmetrie entlang jeder seiner Richtungen aufweist, das sich von jenem des ersten Kopplungsnetzwerkes unterscheidet, wenn es von derselben Seite der Komponente wie das erste Kopplungsnetzwerk gesehen wird, **dadurch gekennzeichnet, dass** dieses zweite Kopplungsnetzwerk das Negativ des ersten Kopplungsnetzwerkes ist, und dadurch, dass die Länge von jedem Kopplungsnetzwerk entlang jeder seiner Richtungen zwischen 100 nm und 600 nm beträgt und die Höhe von jedem Kopplungsnetzwerk zwischen 10 % und 50 % der Länge von diesem beträgt.

2. Optische Sicherheitskomponente nach Anspruch 1, in welcher die Perioden in beide Richtungen für jedes des ersten und zweiten Kopplungsnetzwerks identisch sind.

3. Optische Sicherheitskomponente nach einem der vorstehenden Ansprüche, in welcher das Profil entlang jeder der Richtungen des ersten und zweiten Kopplungsnetzwerks ein pseudo-sinusförmiges Profil ist, welches ein Tastverhältnis aufweist, das in jedem Fall weniger als 40 % beträgt.

4. Optische Sicherheitskomponente nach einem der vorstehenden Ansprüche, die unter anderem auf einem Bereich von mindestens einer der besagten Metall-Dielektrikum-Grenzflächen eine Schicht aus dielektrischem Material mit hohem oder niedrigem Index umfasst.

5. Optische Sicherheitskomponente nach Anspruch 4, in welcher die besagte Schicht aus dielektrischem Material mit hohem oder niedrigem Index nach einem erkennbaren Muster gebildet ist.

6. Optisches Sicherheitselement, das zur Sicherung eines Dokuments bestimmt ist und das mindestens eine optische Sicherheitskomponente nach einem der vorstehenden Ansprüche umfasst.

7. Gesichertes Dokument (200), umfassend einen Träger (212) und eine optische Sicherheitskomponente nach einem der Ansprüche 1 bis 5 oder ein optisches Sicherheitselement (10) nach Anspruch 6, befestigt auf dem besagten Träger, wobei der besagte Träger einen transparenten Bereich (213) umfasst, in welchem die besagte optische Sicherheitskomponente angeordnet ist.

8. Methode zur Herstellung einer optischen Sicherheitskomponente mit Plasmonen-Wirkung, umfassend:

- die Abscheidung einer metallischen Schicht (3) auf einer ersten Schicht (2) aus strukturiertem transparenten dielektrischen Material, wodurch das Erhalten einer ersten strukturierten Metall-Dielektrikum-Grenzfläche (32) ermöglicht wird,
- die Verkapselung der besagten metallischen Schicht durch eine zweite Schicht (4) aus transparentem dielektrischen Material, um eine zweite strukturierte Metall-Dielektrikum-Grenzfläche (31) zu bilden, und in welcher:
- die beiden Metall-Dielektrikum-Grenzflächen (31, 32) strukturiert sind, um auf einem ersten Kopplungsbereich ein erstes zweidimensionales Kopplungsnetzwerk ($C_1$) zu bilden, das periodisch ist, dazu geeignet, Oberflächenplasmonenmoden, die durch die besagten Metall-Dielektrikum-Grenzflächen getragen werden, mit einer einfallenden Lichtwelle zu koppeln, wobei das erste Kopplungsnetzwerk ein asymmetrisches Profil ohne zentrale Symmetrie entlang jeder seiner Richtungen aufweist, und auf einem zweiten Kopplungsbereich ein zweites zweidimensionales Kopplungsnetzwerk ($C_2$) zu bilden, das periodisch ist, dazu geeignet, Oberflächenplasmonenmoden, die durch die besagten Metall-Dielektrikum-Grenzflächen getragen werden, mit einer einfallenden Lichtwelle zu koppeln, wobei das zweite Kopplungsnetzwerk ein asymmetrisches Profil ohne zentrale Symmetrie entlang jeder seiner Richtungen aufweist, das sich von jenem des ersten Kopplungsnetzwerkes unterscheidet, wenn es von derselben Seite der Komponente wie das erste Kopplungsnetzwerk gesehen wird,

**dadurch gekennzeichnet, dass** dieses zweite Kopplungsnetzwerk das Negativ des ersten Kopplungsnetzwerkes ist, und dadurch, dass die Länge von jedem Kopplungsnetzwerk entlang jeder seiner Richtungen zwischen 100 nm und 600 nm beträgt und die Höhe von jedem Kopplungsnetzwerk zwischen 10 % und 50 % der Länge von diesem beträgt.

**9.** Methode nach Anspruch 8, unter anderem umfassend:

- die Herstellung einer ersten Matrix für die Strukturierung der Metall-Dielektrikum-Grenzflächen in dem ersten Kopplungsbereich, um ein erstes Kopplungsnetzwerk zu bilden, und die Herstellung einer zweiten Matrix für die Strukturierung der Metall-Dielektrikum-Grenzflächen in dem zweiten Kopplungsbereich, um das zweite Kopplungsnetzwerk zu bilden, wobei die zweite Matrix eine Negativ-Kopie der ersten Matrix ist.

**10.** Methode nach einem der Ansprüche 8 oder 9, unter anderem umfassend:

- die Abscheidung auf einem Bereich von mindestens einer der besagten Metall-Dielektrikum-Grenzflächen einer Schicht (5) aus dielektrischem Material mit hohem oder niedrigem Index.

**Claims**

**1.** A plasmonic-effect security optical component ($10_A$, $10_B$), comprising:

- two layers (2, 4) made of transparent dielectric,
- a metal layer (3) arranged between said transparent dielectric layers so as to form two dielectric-metal interfaces (31, 32), wherein said said metal layer is structured to form:

  ∘ in a first coupling zone, a first periodic two-dimensional coupling grating ($C_1$) able to couple surface plasmon modes supported by said dielectric-metal interfaces to an incident light wave, the first coupling grating having an asymmetric profile without central symmetry in each of its directions, and,
  ∘ in a second coupling zone, a second periodic two-dimensional coupling grating ($C_2$) able to couple surface plasmon modes supported by said dielectric-metal interfaces to an incident light wave, the second coupling grating having an asymmetric profile, without central symmetry, in each of its directions, which profile is different from that of the first coupling grating when it is seen from the same side of the component as the first coupling grating,

**characterized in that** the second coupling grating is the negative of the first coupling grating and the pitch of each coupling grating in each of its directions is comprised between 100 nm and 600 nm and the height of each coupling grating is comprised between 10% and 50% of the pitch thereof.

**2.** The security optical component as claimed in claim 1, wherein the periods of each of the first and second coupling gratings are identical in both the two directions.

**3.** The security optical component as claimed in any one of the preceding claims, wherein the profile in each of the directions of the first and second coupling gratings is a pseudo-sinusoidal profile having a duty ratio strictly lower than 40%.

4. The security optical component as claimed in any one of the preceding claims, furthermore comprising, in a region of at least one of said metal-dielectric interfaces, a layer made of high- or low-index dielectric.

5. The security optical component as claimed in claim 4, wherein said layer made of high- or low-index dielectric forms a recognizable pattern.

6. A security optical element intended to make a document secure and comprising at least one security optical component as claimed in any one of the preceding claims.

7. A secure document (200) comprising a substrate (212) and a security optical component as claimed in any one of claims 1 to 5 or a security optical element (10) as claimed in claim 6 fastened to said substrate, said substrate comprising a transparent zone (213) in which said security optical component is arranged.

8. A method for manufacturing a plasmonic effect security optical component, comprising:

- depositing a metal layer (3) on a structured first layer (2) made of transparent dielectric, allowing a first structured metal-dielectric interface (32) to be obtained; and
- encapsulating said metal layer with a second layer (4) made of transparent dielectric, so as to form a second structured dielectric-metal interface (31), and wherein:
- the two dielectric-metal interfaces (31, 32) are structured so as to form:

  ◦ in a first coupling zone, a first periodic two-dimensional coupling grating ($C_1$) able to couple surface plasmon modes supported by said dielectric-metal interfaces to an incident light wave, the first coupling grating having an asymmetric profile without central symmetry in each of its directions, and,
  ◦ in a second coupling zone, a second periodic two-dimensional coupling grating ($C_2$) able to couple surface plasmon modes supported by said dielectric-metal interfaces to an incident light wave, the second coupling grating having an asymmetric profile, without central symmetry, in each of its directions, which profile is different from that of the first coupling grating when it is seen from the same side of the component as the first coupling grating,

  **characterized in that** the second coupling grating is the negative of the first coupling grating and the pitch of each coupling grating in each of its directions is comprised between 100 nm and 600 nm and the height of each coupling grating is comprised between 10% and 50% of the pitch thereof.

9. The method as claimed in claim 8, furthermore comprising:

- manufacturing a first master for structuring the metal-dielectric interfaces in the first coupling zone in order to form the first coupling grating and manufacturing a second master for structuring the metal-dielectric interfaces in the second coupling zone in order to form the second coupling grating, the second master being a negative replica of the first master.

10. The method as claimed in either one of claims 8 and 9, furthermore comprising:

- depositing on a region of at least one of said metal-dielectric interfaces a layer (5) made of high- or low-index dielectric.

FIG.1

FIG.2

EP 3 099 513 B1

Face A

ZONE 1

ZONE 4

$I_0$  $R_1$

$T_1$

$C_1$

$S_1$

$T_1$

$C_2$

$I_0$  $R_2$

$S_2$

$S_2$

$I_0$

$R_2$

$T_1$

$S_1$

$I_0$

$R_1$

$T_1$

3

Face B

FIG.3

EP 3 099 513 B1

Réflexion

Zone 1

recto

Zone 4

FIG.4A

Zone 1

verso

Zone 4

FIG.4C

Transmission

Zone 1

recto

Zone 4

FIG.4B

Zone 1

verso

Zone 4

FIG.4D

EP 3 099 513 B1

FIG.5A

FIG.5B

FIG.5C

FIG.5D

EP 3 099 513 B1

FIG.5E

FIG.5F

FIG.5G

Face A

Face B

FIG.6

EP 3 099 513 B1

FIG.7

FIG.8A

FIG.8C

Transmission

FIG.8B

FIG.8D

FIG.9A

FIG.9B

FIG.9C

FIG.9D

FIG.9E

FIG.9F

FIG.10A

FIG.10B

EP 3 099 513 B1

EP 3 099 513 B1

FIG.10C

FIG.10D

FIG.10E

FIG.11A

FIG.11B

FIG.11C

FIG.11D

EP 3 099 513 B1

FIG.11E

FIG.11F

EP 3 099 513 B1

recto

## FIG.12A

verso

## FIG.12B

## RÉFÉRENCES CITÉES DANS LA DESCRIPTION

**Documents brevets cités dans la description**

- FR 2973917
- WO 2012156049 A